# EUROPEAN PATENT SPECIFICATION

(11) **EP 1 630 034 B1**
(45) Date of publication and mention of the grant of the patent: **25.08.2010**
(21) Application number: 05104561.5
(22) Date of filing: 27.05.2005
(51) Int. Cl.: B60N 2/28, B60N 2/22, B60N 2/62

(54) **Infant chair for automobiles**
Kindersitz für Kraftfahrzeuge
Siège d'enfants pour véhicules automobiles

(30) Priority: 23.08.2004 ES 200402071
(43) Date of publication of application: 01.03.2006
(73) Proprietor: PLAY, S.A., 08184 Palau de Plegamans (ES)
(72) Inventor: Jané Stopp, Joaquim Play, S.A., 08184 Palau de Plegamans (ES)
(74) Representative: Ponti Sales, Adelaida

(56) References cited:
- DE-A- 4 137 599
- GB-A- 2 116 837
- GB-A- 2 362 094
- GB-A- 2 366 194

## Description

The present invention refers to an infant chair for automobiles, preferably for children from 15 kg.

### BACKGROUND OF THE INVENTION

There are known different types of infant security chairs for automobiles, whose features depend of the weight of the baby or child which uses them.

The infant chairs for children with a weight over 15 kg. comprise a seat where the child seats and a backrest, which can be articulated or not with respect to said seat.

These infant chairs are placed in the automobile so that the seat rests against the vehicle seat and the backrest also rests against the backrest of the vehicle.

In the infant chairs with articulated backrest, to vary the inclination of it, it is necessary to move the seat manually to the desired position, so that the backrest adapts to said position, resting against the backrest of the vehicle.

It is apparent that this movement of the seat is uncomfortable, because it involves to have to move its whole weight manually without any guide.

To solve this drawback an infant chair for automobiles was devised, as disclosed in the patent application ES-200301988, of the same applicant as the present application and not published before the priority date of the present application.

This infant chair comprises a seat on which the user of the chair sits and a base linked to said seat, being said seat movable with respect to said base. Said base comprises a driving lever to place the seat in at least two positions.

Even though this infant chair solves the drawbacks cited previously, it presents the drawback that the seat, and consequently the inclination of the backrest, can only be placed in a limited number of positions, usually two.

Therefore, it exists the necessity of an infant chair in which the seat, and the inclination of the backrest, can be placed in any position.

GB 2 116 837 A which is considered to represent the closest prior art, discloses an infant seat for motor vehicles, comprising a frame secured to the rear seat of the vehicle and a bucket seat is pivotally mounted in a sub-frame, which may be movable relative to the fixed frame. Pivoting of the bucket seat into a generally horizontal position allows for reclining of the infant.

### DESCRIPTION OF THE INVENTION

With the infant chair of the invention the cited drawbacks are solved, presenting other advantages which will be described.

The infant chair for automobiles of the present invention comprises a seat on which the user of the chair sits and a backrest articulated with respect to said seat, and it comprises means to change the inclination of the backrest with respect to the seat in any position between two end positions.

Thanks to this feature, the chair of the present invention can be inclined in any desired inclination, without the necessity to choose a predetermined position.

Said means to change the inclination of the backrest with respect to the seat comprises:
- a base structure, along which is movable said seat, and linked to said backrest;
- at least one rack provided in said base structure;
- at least one gear wheel which meshes with said rack; and
- at least one knob integral in rotation with said gear wheel, so that the rotation of said knob causes the movement of said gear wheel along said rack and the movement of the seat with respect to said base structure, causing the change of the inclination of the backrest with respect to the seat.

The base structure and the backrest are linked through a vertical extension at its rear part.

Therefore, it is very simple to change the inclination of the backrest, simply rotating the knob.

Advantageously, the seat comprises a frontal piece movable with respect to the rest of the seat, so that the child which uses the chair can be more comfortable, which can be adapted to the height to the child and to the inclination of the backrest.

Advantageously, the seat comprises means to regulate the position of said frontal piece in any position between two end positions.

According to a preferred embodiment, said means to regulate the position of said frontal piece comprises a knob integral with said frontal piece and provided with a threaded stem, whose stem is housed in a threaded bush integral with the seat, so that the rotation of said knob causes the movement of said frontal piece with respect to the seat.

### BRIEF DESCRIPTION OF THE DRAWINGS

For a better understanding of which has been exposed, some drawings are attached, in which, diagrammatically and only as a non-limitative example, it is shown a practical embodiment.
Fig. 1 is a lateral elevation view of the framework of the infant chair of the present invention;
Fig. 2 is a rear elevation view of the framework of the infant chair of the present invention;

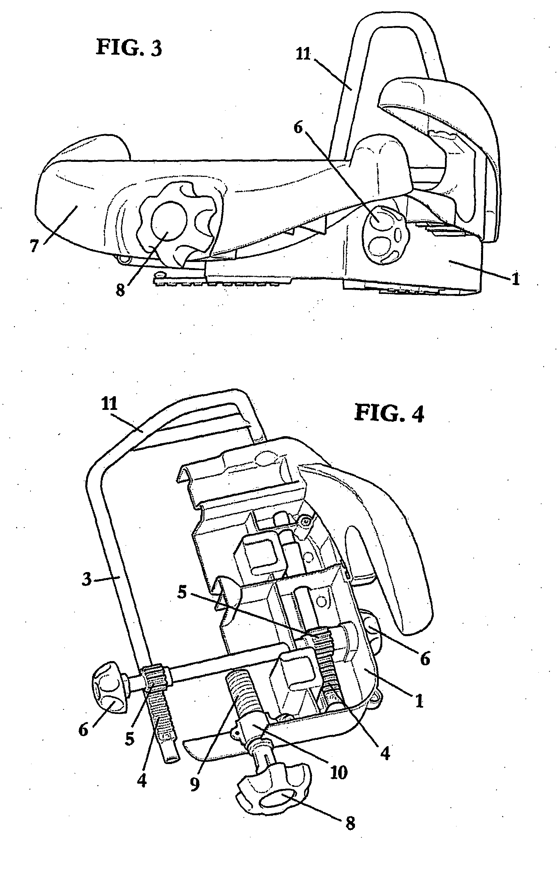

Fig. 3 is a perspective view of the seat of the chair of the present invention; and
Fig. 4 is a perspective view of the seat, with its upper part removed.

### DESCRIPTION OF A PREFERRED EMBODIMENT

First, it must be stated that in the figure only the framework or structure of the chair of the present invention has been shown for simplicity reasons. Therefore, it is apparent that on said framework or structure will placed a suitable quilting material before its use, to obtain the desired comfort of the child which will use it.

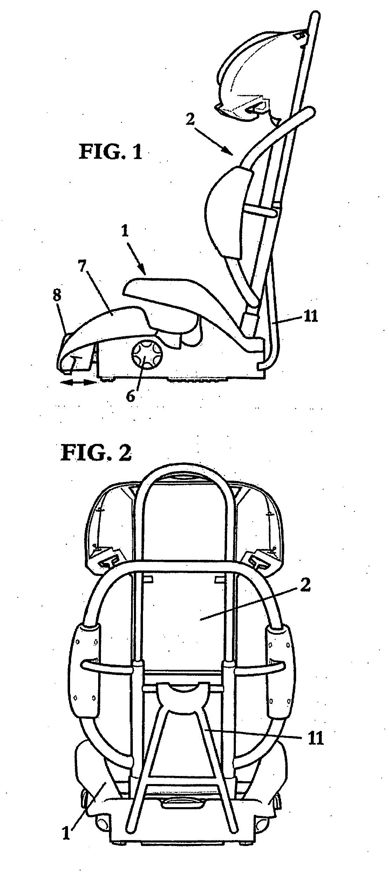

As may be seen in Fig. 1, the infant chair of the present invention comprises a seat 1, where the user of the chair sits, and a backrest 2 articulated to said seat 1.

According to the invention, the infant chair also comprises means to change the inclination of the backrest 2 with respect to the seat 1 in any position between two end positions.

The means to change the inclination of the backrest 2 with respect to the seat 1 comprises:
- a base structure 3, along which said seat 1 is movable, and linked to said backrest 2 through a vertical extension 11 at its rear part;
- two racks 4 provided at said base structure 3;
- two gear wheels 5 which mesh with said racks 4; and
- two knobs 6 integral in rotation with said gear wheels 5, so that the rotation of said knobs 6 causes

the movement of said gear wheels 5 along said racks 4 and the movement of the seat 1 with respect to said base structure 3, causing the change of the inclination of the backrest 2 with respect to the seat 1.

The seat 1 also comprises a frontal piece 7 movable with respect to the rest of the seat 1 to be adapted when the child grows.

This frontal piece 7 can be placed in any position between two end positions.

The regulating means of the position of said frontal piece comprises a knob 8 integral with said frontal piece 7 and provided with a threaded stem 9. This threaded stem 9 is housed in a threaded bush 10 integral with the seat, so that the rotation of said knob 8 causes the movement of said frontal piece 7 with respect to the seat 1.

Therefore, the infant chair of the present invention can be adapted to improve the comfort of the child which uses it.

Even though it has been described a particular embodiment of the invention, it is evident for a person skilled in the art that in the infant chair can be made some variations and modifications, and that all the details cited can be substituted by other technically equivalents, without departing from the scope of protection defined by the enclosed claims.

## Claims

1. Infant chair for automobiles, which comprises a seat (1) on which the user of the chair seats and a backrest (2) articulated with respect to said seat (1), means to change the
inclination of the backrest (2) with respect to the seat (1) in any position between two end positions
said means to change the inclination of the backrest (2) with respect to the seat (1) comprising:
- a base structure (3), along which is movable said seat (1), and linked to said backrest (2);
- at least one rack (4) provided in said base structure (3);
- at least one gear wheel (5) which meshes with said rack (4); and
- at least one knob (6) integral in rotation with said gear wheel (5), so that the rotation of said knob (6) causes the movement of said gear wheel (5) along said rack (4) and the movement of the seat (1) with respect to said base structure (3), causing the change of the inclination of the backrest (2) with respect to the seat (1);
**characterized in that** the base structure (3) and the backrest (2) are linked through a vertical extension (11) at its rear part.

2. Infant chair according to claim 1, **characterized in that** the seat (1) comprises a frontal piece (7) movable with respect to the rest of the seat (1).

3. Infant chair according to claim 2, **characterized in that** the seat comprises means to regulate the position of said frontal piece (7) in any position between two end positions.

4. Infant chair according to claim 3, **characterized in that** said means to regulate the position of said frontal piece comprises a knob (8) integral with said frontal piece (7) and provided with a threaded stem (9), whose stem is housed in a threaded bush (10) integral with the seat, so that the rotation of said knob (8) causes the movement of said frontal piece (7) with respect to the seat (1).

## Patentansprüche

1. Kindersessel für Automobile, der einen Sitz (1), auf welchem der Benutzer des Sessels Platz nimmt, eine in Bezug auf den Sitz (1) gelenkige Rückenlehne (2) und Mittel zum Verstellen der Neigung der Rückenlehne (2) in Bezug auf den Sitz (1) in eine beliebige Position zwischen zwei Anschlagspositionen aufweist, wobei die Mittel zum Verstellen der Neigung der Rückenlehne (2) in Bezug auf den Sitz (1) Folgendes aufweisen:
- eine Basisstruktur (3), entlang welcher der Sitz (1) beweglich ist, und die mit der Rückenlehne verbunden ist (2),
- mindestens eine in der Basisstruktur (3) bereitgestellte Zahnstange (4),
- mindestens ein Zahnrad (5), das in die Zahnstange (4) eingreift, und
- mindestens einen Knopf (6), der drehfest mit dem Zahnrad verbunden (5) ist, so dass Drehen des Knopfes (6) bewirkt, dass sich das Zahnrad (5) an der Zahnstange (4) entlang bewegt und sich der Sitz (1) in Bezug auf die Basisstruktur (3) bewegt, was die Verstellung der Neigung der Rückenlehne (2) in Bezug auf den Sitz (1) bewirkt,
**dadurch gekennzeichnet, dass** die Basisstruktur (3) und die Rückenlehne (2) über eine vertikale Verlängerung (11) an deren Rückseite verbunden sind.

2. Kindersessel nach Anspruch 1, **dadurch gekennzeichnet, dass** der Sitz (1) ein Vorderstück (7) aufweist, welches in Bezug auf den Rest des Sitzes (1) beweglich ist.

3. Kindersessel nach Anspruch 2, **dadurch gekennzeichnet, dass** der Sitz Mittel zum Einstellen der Position des Vorderstücks (7) auf eine beliebige Position zwischen zwei Anschlagspositionen aufweist.

4. Kindersessel nach Anspruch 3, **dadurch gekennzeichnet, dass** das Mittel zum Einstellen der Position des Vorderstücks einen Knopf (8) aufweist, der fest mit dem Vorderstück (7) verbunden und mit einem Gewindezapfen (9) versehen ist, der in eine fest mit dem Sitz verbundene Gewindebuchse (10) eingeschraubt ist, so dass Drehen des Knopfes (8) bewirkt, dass sich das Vorderstück (7) in Bezug auf den Sitz (1) bewegt.

## Revendications

1. Siège d'enfant pour automobiles, qui comprend un siège (1), sur lequel s'assied l'utilisateur du siège et un dossier (2) articulé par rapport audit siège (1), des moyens pour modifier l'inclinaison du dossier (2) par rapport au siège (1) dans une position quelconque entre deux positions terminales, lesdits moyens permettant de modifier l'inclinaison du dossier (2) par rapport au siège (1) comprenant :
- une structure de base (3), le long de laquelle ledit siège (1) est mobile et articulée audit dossier (2) ;
- au moins une crémaillère (4) aménagée dans ladite structure de base (3) ;
- au moins une roue dentée (5) qui s'engrène sur ladite crémaillère (4) ; et
- au moins un pommeau (6) d'un seul tenant en rotation avec ladite roue dentée (5), de sorte que la rotation dudit pommeau (6) entraîne le mouvement de ladite roue dentée (5) le long de ladite crémaillère (4) et le mouvement du siège (1) par rapport à ladite structure de base (3), ce qui entraîne le changement d'inclinaison du dossier (2) par rapport au siège (1) ;
**caractérisé en ce que** la structure de base (3) et le dossier (2) sont articulés par une extension verticale (11) dans sa partie arrière.

2. Siège d'enfant selon la revendication 1 **caractérisé en ce que** le siège (1) comprend une pièce frontale (7) mobile par rapport au reste du siège (1).

3. Siège d'enfant selon la revendication 2, **caractérisé en ce que** le siège comprend des moyens pour réguler la position de ladite pièce frontale (7) dans une quelconque position entre deux positions terminales.

4. Siège d'enfant selon la revendication 3, **caractérisé en ce que** lesdits moyens permettant de réguler la position de ladite pièce frontale comprennent un pommeau (8) d'un seul tenant avec ladite pièce frontale (7) et muni d'une tige filetée (9), dont la tige est logée dans une douille taraudée (10) faisant partie intégrante du siège, de sorte que la rotation dudit pommeau (8) entraîne le mouvement de ladite pièce frontale (7) par rapport au siège (1).
